# EUROPEAN PATENT SPECIFICATION

(11) **EP 3 113 031 B1**
(45) Date of publication and mention of the grant of the patent: **24.03.2021**
(21) Application number: 16156247.5
(22) Date of filing: 18.02.2016
(51) Int. Cl.: G06F 17/00

(54) **IMAGE PROCESSING DEVICE, IMAGE PROCESSING METHOD, AND PROGRAM**
BILDVERARBEITUNGSVORRICHTUNG, BILDVERARBEITUNGSVERFAHREN UND PROGRAMM
DISPOSITIF DE TRAITEMENT D'IMAGES, PROCEDE DE TRAITEMENT D'IMAGES ET PROGRAMME

(30) Priority: 30.06.2015 JP 2015130705
(43) Date of publication of application: 04.01.2017
(73) Proprietor: Fuji Xerox Co., Ltd., Minato-ku, Tokyo (JP)
(72) Inventor: ICHIDA, Hajime, Yokohama-shi, Kanagawa (JP)
(74) Representative: Haseltine Lake Kempner LLP

(56) References cited:
- US-A1- 2011 107 196
- US-A1- 2015 089 340
- US-B1- 6 988 241

## Description

### BACKGROUND

### 1. Technical Field

The present invention relates to an image processing device, an image processing method, and a program.

### 2. Related Art

Patent Literature 1 (JP-A-2001-312490) discloses that in a template automatic creation system, an object thereof is to automatically create a template in which a page congenial to a user can be created. In a sample page storage unit, a plurality of sample pages congenial to a user are stored. A template extraction unit is positioned in approximately the same position as a plurality of sample pages in the sample pages stored in the sample page storage unit, and extracts the constitution elements which have the same content as content matching constitution elements, and the template extraction unit is positioned in approximately the same position as a plurality of sample pages, and extracts constitution elements which have different content as content mismatching constitution elements. The extracted content constitution elements are arranged at positions corresponding to the arrangement position of the content matching constitution elements in the sample pages and an entry field for the content mismatching constitution elements is arranged at a position corresponding to the arrangement position of the content mismatching constitution elements in the sample pages to generate a template.

Patent Literature 2 (JP-A-2015-005100) discloses that an object thereof is to create a template which is sectioned into a character region described in a form in advance and a region in which characters can be input by a user with high accuracy. A character identification section identifies the fixed characters described in the form in advance and the entry characters which are input by the user from image information items of a plurality of forms. A region identification section identifies an entry region in which characters can be input to the form by the user and a non-entry region in which characters cannot be input to the form by the user based on the fixed characters and the entry characters which are identified by the character identification section. A creation section creates a template of the form based on the entry region and the non-entry region which are identified by the region identification section.

US 2011/107196 A1 discloses a technique for dynamically determining sizes of columns in a table, wherein a sequential group of size targets is provided. The sizes of individual columns in the table are balanced based on an overall size of the table and based on predetermined values for minimum, ideal and maximum sizes for each column in order to ensure that all columns in the table are clearly visible US2015089340 allows developers to provide automatic column resizing in spreadsheet software using a desktop integration framework. The width of a column usually can only be set at or to hard-wired widths or manually adjusted to fit (even with a manually triggered auto adjustment function). This feature adds the ability to control column widths in tables at run time.

### SUMMARY

Creating a template from a known page or form is carried out.

On the other hand, creating a template in which a size of an entry area is changed by focusing on an amount of input characters input in the entry area of a user in the known page or form is not carried out.

An object of the invention is to provide an image processing apparatus, an image processing method and a program which adjust a size of the character input column in accordance with the amount of input characters in the character input columns in which characters can be input by a user when a template is created from image information.
[1] An aspect of the invention provides an image processing device as defined in claim 1.
[2] It may be the image processing device according to [1], in which the amount of inputted characters obtained by the inputted-character-amount obtaining unit is at least one of the number of characters, a size of characters, a total value of sizes of substantially rectangular portions surrounding individual characters, and a statistical value of amounts of inputted characters in the plurality of items of image information.
[3] It may be the image processing device according to [1] or [2], further including: a blank-region identifying unit that identifies a blank region surrounding a character input column, in which, if the character input column is enlarged, the adjusting unit enlarges the character input column in a direction toward the blank region.
[4] It may be the image processing device according to any one of [1] to [3], in which, if the amount of inputted characters in a character input column is equal to or smaller than a predetermined threshold, the adjusting unit deletes the character input column or suggests that the character input column be deleted.
[5] Another aspect of the invention provides an image processing method as defined in claim 5.
[6] Another aspect of the invention provides a program as defined in claim 6.

According to the image processing device of [1] and the image processing method of [5], a size of the character input column can be adjusted in accordance with the amount of input characters in the character input columns in which characters can be input by a user, compared with a configuration in which a template is created based on the similarity of the arrangement of elements in a known page or form.

According to the image processing device of [2], as the amount of input characters, at least one of the number of characters, a size of characters, a total value of sizes of substantially rectangular portions surrounding individual characters, and a statistical value of amounts of input characters in the plurality of items of image information can be used.

According to the image processing device of [3], a blank region can be identified, and if the character input column is enlarged, the character input column in a direction toward the blank region can be enlarged.

According to the image processing device of [4], in a case where the amount of input characters in a character input column is equal to or smaller than a predetermined threshold, the character input column can be deleted or the delete suggestion can be performed.

According to the program of [6], a size of the character input column can be adjusted in accordance with the amount of input characters in the character input columns in which characters can be input by a user, compared with a configuration in which a template is created based on the similarity of the arrangement of elements in a known page or form.

### BRIEF DESCRIPTION OF THE DRAWINGS

An exemplary embodiment of the present invention will be described in detail based on the following figures, wherein:
Fig. 1 is a block diagram illustrating conceptual modules forming an example of the configuration of an exemplary embodiment of the invention;
Figs. 2A and 2B illustrate examples of system configurations to which an exemplary embodiment is applied;
Fig. 3 is a flowchart illustrating an example of processing executed in an exemplary embodiment;
Fig. 4 illustrates an example of the data structure of a character input column information table;
Figs. 5 through 7B illustrate examples of processing executed in an exemplary embodiment; and
Fig. 8 is a block diagram illustrating an example of the hardware configuration of a computer implementing an exemplary embodiment.

### DETAILED DESCRIPTION

An exemplary embodiment of the invention will be described below with reference to the accompanying drawings.

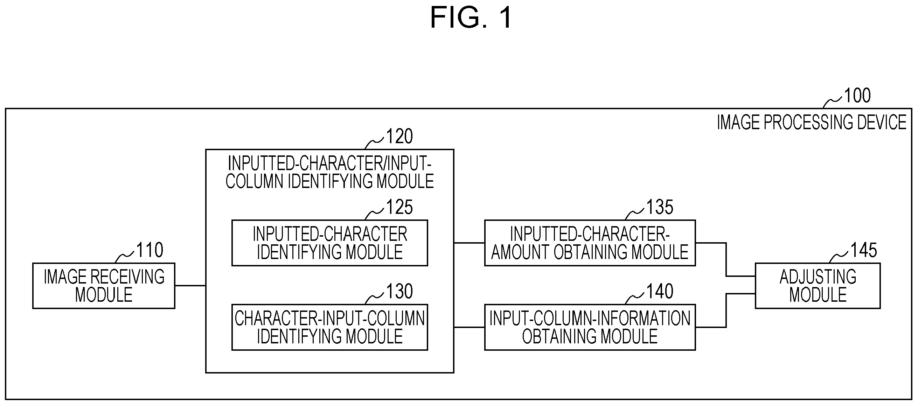

Fig. 1 is a block diagram illustrating conceptual modules forming an example of the configuration of the exemplary embodiment of the invention.

Generally, modules are software (computer programs) components or hardware components that can be logically separated from one another. Accordingly, the modules of the exemplary embodiment of the invention are not only modules of a computer program, but also modules of a hardware configuration. Thus, the exemplary embodiment will also be described in the form of a computer program for allowing a computer to function as those modules (a program for causing a computer to execute program steps, a program for allowing a computer to function as corresponding units, or a computer program for allowing a computer to implement corresponding functions), a system, and a method. While expressions such as "store", "storing", "being stored" are used for the sake of description, such expressions indicate, when the exemplary embodiment relates to a computer program, storing the computer program in a storage device or performing control so that the computer program is stored in a storage device. Modules may correspond to functions based on a one-to-one relationship. In terms of implementation, however, one module may be constituted by one program, or plural modules may be constituted by one program. Conversely, one module may be constituted by plural programs. Additionally, plural modules may be executed by using a single computer, or one module may be executed by using plural computers in a distributed or parallel environment. One module may integrate another module therein. Hereinafter, the term "connection" includes not only physical connection, but also logical connection (sending and receiving of data, giving instructions, reference relationships among data elements, etc.). The term "predetermined" means being determined prior to a certain operation, and includes the meaning of being determined prior to a certain operation before starting processing of the exemplary embodiment, and also includes the meaning of being determined prior to a certain operation even after starting processing of the exemplary embodiment, in accordance with the current situation/state or in accordance with the previous situation/state. If there are plural "predetermined values", they may be different values, or two or more of the values (or all the values) may be the same. A description having the meaning "in the case of A, B is performed" is used as the meaning "it is determined whether the case A is satisfied, and B is performed if it is determined that the case A is satisfied", unless such a determination is unnecessary.

A system or an apparatus may be realized by connecting plural computers, hardware units, devices, etc., to one another via a communication medium, such as a network (including communication based on a one-to-one correspondence), or may be realized by a single computer, hardware unit, device, etc. The terms "apparatus" and "system" are used synonymously. The term "system" does not include merely a man-made social "mechanism" (social system).

Additionally, every time an operation is performed by using a corresponding module or every time each of plural operations is performed by using a corresponding module, target information is read from a storage device, and after performing the operation, a processed result is written into the storage device. Accordingly, a description of reading from the storage device before an operation or writing into the storage device after an operation may be omitted. Examples of the storage device may be a hard disk (HD), a random access memory (RAM), an external storage medium, a storage device using a communication line, a register within a central processing unit (CPU), etc.

An image processing device 100 according to this exemplary embodiment is a device used for generating document formats (also called forms and templates, hereinafter referred to as "forms"), and includes, as shown in Fig. 1, an image receiving module 110, an inputted-character/input-column identifying module 120, an inputted-character-amount obtaining module 135, an input-column-information obtaining module 140, and an adjusting module 145.

Generally, a form includes an input column (also called a frame). A user fills in this input column by writing, for example, characters, by hand.

In some forms, a user may have to input many characters into a small input column, in which case, the user has to input a large amount of information into this input column in small characters.

According to the technologies of the related art, however, it is difficult to change the format of a template, and merely the same template as that filled by a user can be created. If an input column of a template is found to be too small, it is necessary to create a new template. This situation will be discussed by taking a specific example. An example of a form document is a questionnaire sheet, and a user may be asked to fill in this questionnaire sheet by hand. When a survey is conducted on the street by using such questionnaire sheets, even if an input column in a collected questionnaire sheet is found to be too small, it is difficult to change the format of the questionnaire sheet on the street since a personal computer (PC) for editing a form document is not usually available on the street.

Accordingly, in this exemplary embodiment, the sizes of character input columns are adjusted by using the images of completed multiple forms. This will be discussed by taking a specific example. It is assumed that a survey is conducted by using questionnaire sheets. Some questionnaire sheets are collected in the morning, and if it is found that the sizes of some character input columns are not suitable, they can be adjusted on the spot. Then, the survey is restarted in the afternoon by using new questionnaire sheets with the adjusted input columns. In this manner, even if data concerning the original form document is not available, it is possible to adjust the sizes of character input columns of the form document.

The image receiving module 110 is connected to the inputted-character/input-column identifying module 120. The image receiving module 110 receives an image and supplies it to the inputted-character/input-column identifying module 120. Receiving of an image includes reading of an image by using a camera or a scanner, receiving of an image from an external device by using a fax machine via a communication network, and reading of an image stored in a hard disk (may be built in a computer or may be connected to a computer via a network). The image may be a binary image or a multi-valued image (including a color image). One image or multiple images may be received. The image may indicate a form filled with characters, which may be concerned with a business document or an advertisement brochure. In this case, within the form, a character input column is included, and user's handwritten characters are inputted into this character input column. The form is specifically a completed questionnaire sheet, such as the one described above.

The inputted-character/input-column identifying module 120 includes an inputted-character identifying module 125 and a character-input-column identifying module 130. The inputted-character/input-column identifying module 120 is connected to the image receiving module 110, the inputted-character-amount obtaining module 135, and the input-column-information obtaining module 140. The inputted-character/input-column identifying module 120 distinguishes characters inputted by a user and a character input column from each other from information concerning images received by the image receiving module 110. That is, the inputted-character/input-column identifying module 120 separates the image portion indicating the original form (including the character input column) and a portion written by a user from each other. That is, the inputted-character/input-column identifying module 120 may perform logical operation (AND operation) on the multiple images so as to extract the form image portion, or may perform logical operation (EOR operation) on the multiple images so as to extract the portion inputted by the user. Alternatively, the inputted-character/input-column identifying module 120 may extract a rectangular character input column, and then extract the image within this character input column as a portion inputted by a user and extract the remaining portion as the form image portion. The extracting operation may be performed by using a known technique.

The inputted-character identifying module 125 identifies characters inputted by a user from information indicating multiple images received by the image receiving module 110. That is, the inputted-character identifying module 125 identifies the portion added by the user as the characters inputted by the user.

The character-input-column identifying module 130 identifies the character input column from information indicating multiple images received by the image receiving module 110. That is, the character-input-column identifying module 130 identifies a rectangular shape from the above-described form image portion and identifies it as a character input column.

The inputted-character-amount obtaining module 135 is connected to the inputted-character/input-column identifying module 120 and the adjusting module 145. The inputted-character-amount obtaining module 135 obtains the amount of inputted characters in each of character input columns located at different positions. Since the multiple images received by the image receiving module 110 indicate a document including the form filled by the users, the same character input columns within these multiple images are located at substantially the same position. Accordingly, "character input columns located at different positions" correspond to different character input columns in the form.

The amount of inputted characters obtained by the inputted-character-amount obtaining module 135 may be at least one of the items: the number of characters, the size of characters, the total value of the sizes of substantially rectangular portions surrounding the individual characters, and the statistical value of the amounts of inputted characters in multiple images. As the number of characters, the number of recognized characters may be counted by using a character recognition technique. As the size of characters, the number of black pixels forming the characters may be used. The rectangular portion surrounding a character is a so-called circumscribed rectangle. The statistical value of the amounts of inputted characters in multiple images is the value obtained by performing statistical processing on the amount of inputted characters in each character input column in each image. Examples of the statistical value are a total value, an average, a median, and a mode.

The input-column-information obtaining module 140 is connected to the inputted-character/input-column identifying module 120 and the adjusting module 145. The input-column-information obtaining module 140 obtains information concerning the size of each character input column. Examples of the information concerning the size of each character input column are the area, height, and width of each character input column. Hereinafter, a description will be given, assuming that the size of a character input column is the area of a character input column.

The adjusting module 145 is connected to the inputted-character-amount obtaining module 135 and the input-column-information obtaining module 140. The adjusting module 145 adjusts the size of each character input column in accordance with information concerning the size of the corresponding character input column and the amount of characters inputted into this character input column. For example, the adjusting module 145 may adjust the size of a character input column by the ratio of the area of the character input column to the amount of characters inputted into this character input column. More specifically, if the value obtained by dividing the area of a character input column obtained from the input-column-information obtaining module 140 by the amount of inputted characters obtained from the inputted-character-amount obtaining module 135 is equal to or smaller than a predetermined threshold, the adjusting module 145 increases this character input column to a larger size. Conversely, if the above-described value is equal to or greater than the predetermined threshold, the adjusting module 145 decreases this character input column to a smaller size or deletes it. Increasing or decreasing of a character input column includes enlarging or reducing of a character input column, increasing or decreasing only one of the height and the width of a character input column, and enlarging or reducing the height and the width of a character input column with different scaling factors.

The adjusting module 145 may identify a blank region around a character input column, and if this character input column is enlarged, the adjusting module 145 may enlarge the character input column in a direction toward this blank region. More specifically, the adjusting module 145 may measure the areas of blank regions, which are substantially rectangular portions outside of the four sides of the character input column, and may enlarge the character input column in a direction toward the blank region having the largest area.

If the amount of characters inputted into a character input column is equal to or smaller than a predetermined threshold, the adjusting module 145 may delete the character input column or suggest that the character input column be deleted. In this case, the adjusting module 145 may make this suggestion by displaying a message that the character input column is advised to be deleted because the amount of characters inputted into this input column is small, on a display device, such as a liquid crystal display (panel), included in the image processing device 100. Then, in response to this suggestion, an instruction indicating "agreed (YES)" or "not agreed (NO)" is received from a user using the image processing device 100, and if the instruction indicates "agreed (YES)", the adjusting module 145 deletes this character input column.

When increasing a character input column, the adjusting module 145 may first decrease or delete this character input column. In order to secure a blank portion for increasing a character input column, the adjusting module 145 first decreases or deletes the character input column.

After adjusting a character input column, the adjusting module 145 leaves the inside of the character input column blank.

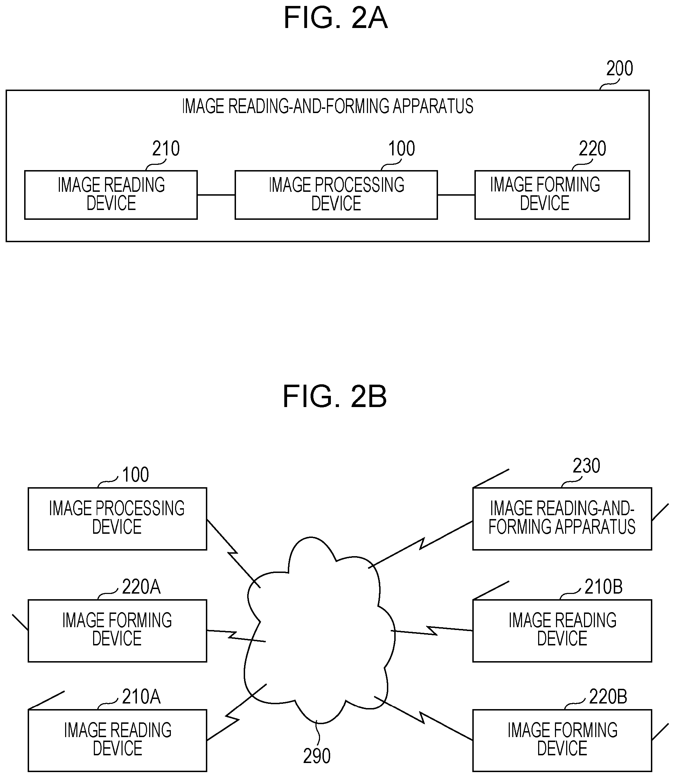

Figs. 2A and 2B illustrate examples of system configurations to which this exemplary embodiment is applied.

Fig. 2A illustrates an example of this exemplary embodiment configured as a stand-alone system. An image reading-and-forming apparatus 200 includes the image processing device 100, an image reading device 210, and an image forming device 220. The image reading-and-forming apparatus 200 is implemented as a multifunction device (image processing device including at least two of the functions of a scanner, a printer, a copying machine, and a fax machine). The image reading device 210 is connected to the image processing device 100. The image reading device 210 has a function as a scanner. The image processing device 100 is connected to the image reading device 210 and the image forming device 220. The image forming device 220 is connected to the image processing device 100. The image forming device 220 has a function as a printer.

Fig. 2B illustrates an example of this exemplary embodiment which provides the functions of the image processing device 100 via a communication network 290. The image processing device 100, image reading devices 210A and 210B (may be referred to as an "image reading device 210"), image forming devices 220A and 220B (may be referred to as an "image forming device 220"), and an image reading-and-forming apparatus 230 are connected to one another via the communication network 290. The communication network 290 may be a wireless or wired medium, or a combination thereof, and may be, for example, the Internet or an intranet as a communication infrastructure. The functions of the image processing device 100 may be implemented as cloud services. The image reading-and-forming apparatus 230 is formed as a combination of the image reading device 210 and the image forming device 220. The image reading device 210 has a function as a scanner, and the image forming device 220 has a function as a printer.

For example, a completed form document is read by the image reading device 210 or the image reading-and-forming apparatus 230, and image information indicating the completed form document is transmitted to the image processing device 100. The image processing device 100 then adjusts the size of a character input column indicated by the image information so as to generate a new form document, and transmits it to the image forming device 220 or the image reading-and-forming apparatus 230. The image forming device 220 or the image reading-and-forming apparatus 230 then prints the adjusted form document. A user then fills in this adjusted form document.

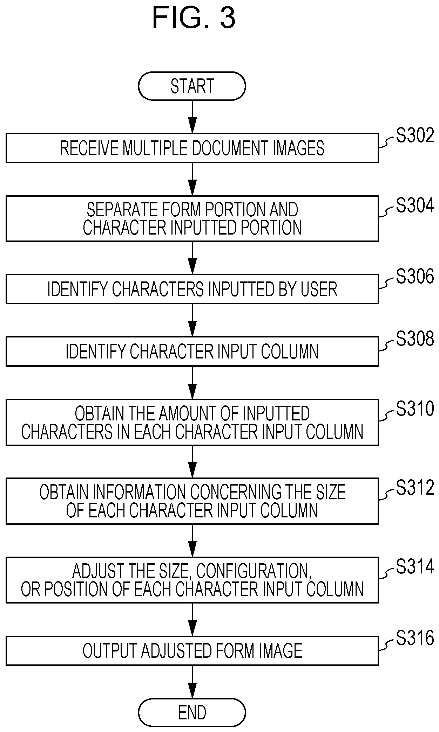

Fig. 3 is a flowchart illustrating an example of processing executed in this exemplary embodiment.

In step S302, the image receiving module 110 receives multiple document images.

In step S304, the inputted-character/input-column identifying module 120 separates a form portion and a character inputted portion from each other by using the multiple document images.

In step S306, the inputted-character identifying module 125 identifies characters inputted by a user.

In step S308, the character-input-column identifying module 130 identifies a character input column.

In step S310, the inputted-character-amount obtaining module 135 obtains the amount of inputted characters in each character input column.

In step S312, the input-column-information obtaining module 140 obtains information concerning the size of each character input column.

In step S314, the adjusting module 145 adjusts the size, configuration, or position of each character input column in accordance with the amount of inputted characters in the corresponding character input column and the information concerning the size of this character input column. When adjusting the configuration of a character input column, the adjusting module 145 may change the ratio of the height to the width of this character input column. When adjusting the position of a character input column, if a certain character input column is decreased, the position of another character input column may be changed so as to fill in a blank region.

In step S316, the adjusting module 145 outputs the adjusted form image.

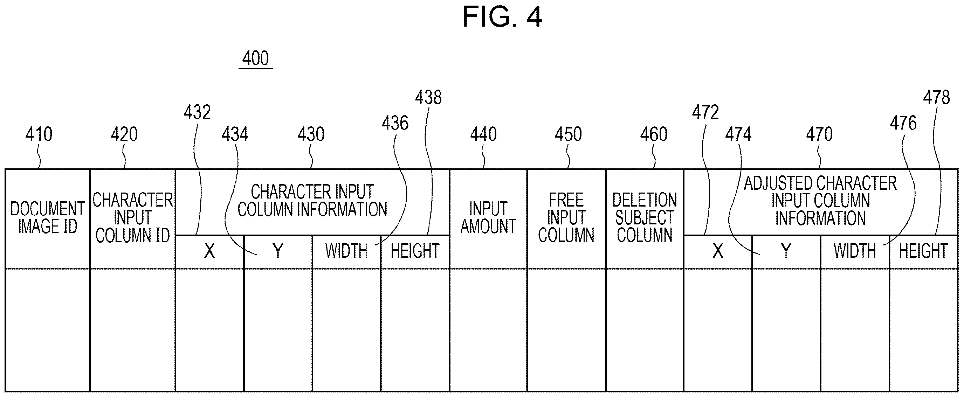

Fig. 4 illustrates an example of the data structure of a character input column information table 400. The character input column information table 400 is used by each of the image receiving module 110, the inputted-character/input-column identifying module 120, the inputted-character-amount obtaining module 135, the input-column-information obtaining module 140, and the adjusting module 145.

The character input column information table 400 includes a document image ID field 410, a character input column ID field 420, a character input column information field 430, an input amount field 440, a free input column field 450, a deletion subject column field 460, and an adjusted character input column information field 470. The character input column information field 430 includes an X field 432, a Y field 434, a width field 436, and a height field 438. The adjusted character input column information field 470 includes an X field 472, a Y field 474, a width field 476, and a height field 478.

In the document image ID field 410, in this exemplary embodiment, information (document image ID) for uniquely identifying a document image is stored. In the character input column ID field 420, in this exemplary embodiment, information (character input column ID) for uniquely identifying a character input column is stored. In the character input column information field 430, information concerning a character input column is stored. In the X field 432, the X coordinate at the top left corner of the character input column is stored. In the Y field 434, the Y coordinate at the top left corner of the character input column is stored. In the width field 436, the width of the character input column is stored. In the height column 438, the height of the character input column is stored. In the input amount field 440, the amount of inputted characters in the character input column is stored.

In the free input column field 450, information indicating whether or not a character input column is a free input column is stored. The free input column is a column into which a user may input sentences or phrases. The character input column other than the free input column is a column into which a user is not supposed to input sentences or phrases, such as a check column. For example, if the size of a character input column is equal to or smaller than a predetermined threshold, it may be determined that this character input column is not a free input column. By referring to the information in the free input column field 450, if the character input column is a free input column, it is determined to be a column which may be adjusted. On the other hand, if the character input column is not a free input column, it is determined to be a column which may not be adjusted, since it is not appropriate that the size of a check column, for example, be adjusted.

In the deletion subject column field 460, information indicating whether or not a character input column is a column to be deleted is stored. That is, if a character input column is a free input column and if the amount of inputted characters in this character input column is equal to or smaller than a predetermined threshold, this character input column is determined to be a column to be deleted. If a character input column is a column to be deleted, it may be deleted or a message indicating that the character input column may be deleted may be displayed.

In the adjusted character input column information field 470, information concerning an adjusted character input column is stored. In the X field 472, the X coordinate at the top left corner of the adjusted character input column is stored. In the Y field 474, the Y coordinate at the top left corner of the adjusted character input column is stored. In the width field 476, the width of the adjusted character input column is stored. In the height column 478, the height of the adjusted character input column is stored.

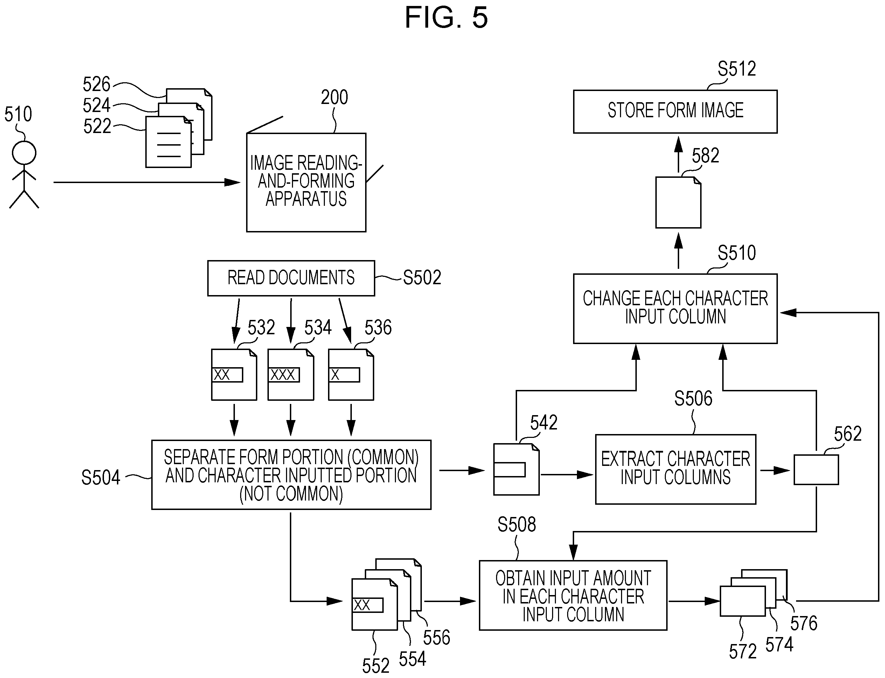

Fig. 5 illustrates an example of processing executed in this exemplary embodiment.

In step S502, the image reading-and-forming apparatus 200 reads documents 522, 524, and 526 in accordance with an operation of a user 510 so as to generate document images 532, 534, and 536, respectively. For example, the image reading-and-forming apparatus 200 reads completed multiple documents generated from one form by performing a scanning operation at one time so as to form images from the scanned multiple documents.

In step S504, the image processing device 100 separates a form portion (common) and a character inputted portion (not common) from each of the document images. Then, a form image 542 is subjected to steps S506 and S510, while character inputted portion images 552, 554, and 556 are subjected to step S508.

In step S506, character input columns other than a check column are extracted, and character input column information 562 is subjected to steps S508 and S510.

In step S508, the input amount in each character input column is obtained. More specifically, the amount of inputted characters is calculated by performing statistical processing on the amount of characters inputted into each character input column in each document image. In the statistical processing, the total value, average, median, or mode of the input amounts in each character input column of the document images is calculated. Then, items of input amount information 572, 574, and 576 are subjected to step S510.

In step S510, each character input column is changed by using the form image 542, the character input column information 562, and the items of input amount information 572, 574, and 576, thereby generating a form image 582. The form image 582 is then subjected to step S512.

In step S512, the form image 582 is stored. Alternatively, the form image 582 may be printed.

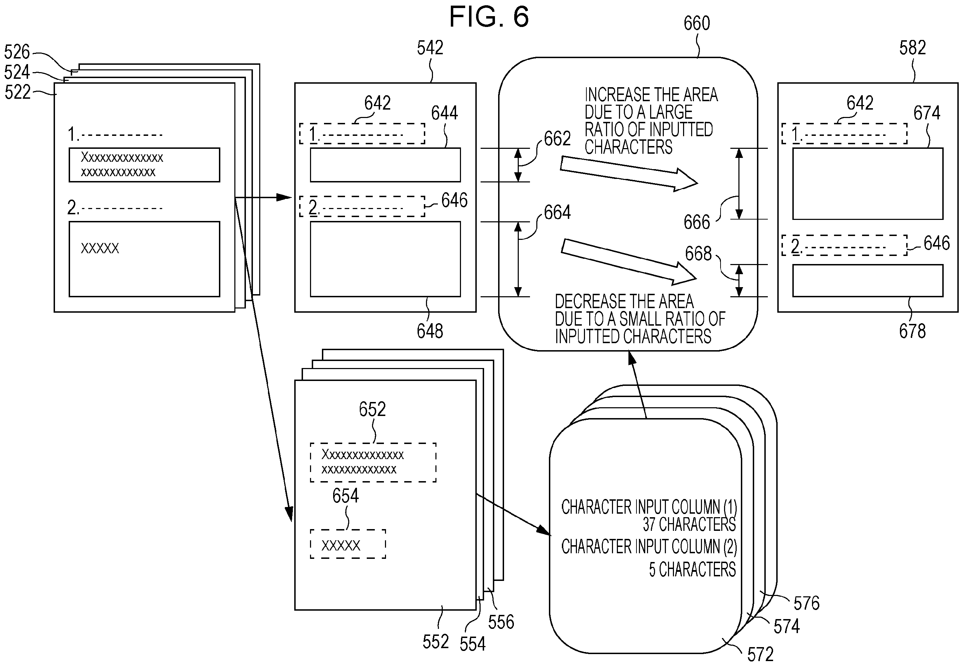

Fig. 6 illustrates an example of processing executed in this exemplary embodiment.

For example, the document 522 has two character input columns. Since the documents 524 and 526 are generated from the same form for the document 522, they have character input columns of the same size located at the same positions as those of the document 522. Generally, however, the contents described in the same character input column are obtained from different users and are thus different among the documents 522, 524, and 526.

The form image 542 is generated as a result of extracting the same portion from the documents 522, 524, and 526. Within the form image 542, a set of a description 642 and a character input column 644 and a set of a description 646 and a character input column 648 are included.

Then, the character inputted portion images 552, 554, and 556 are generated by identifying (extracting) characters inputted by users from the documents 522, 524, and 526, respectively. Within the character inputted portion image 552, a character inputted portion including the content 652 within the character input column 644 and a character inputted portion including the content 654 within the character input column 648 are included. Within the character inputted portion images 554 and 556, similar character inputted portions are also included.

Then, the number of characters within the content 652 of the character input column 644 is counted and calculated as 37, and the number of characters within the content 654 of the character input column 648 is counted and calculated as 5, thereby generating the item of input amount information 572. Similarly, the items of input amount information 574 and 576 are generated by calculating the numbers of characters within the character inputted portion images 554 and 556.

Then, in character-input-column adjustment processing 660, the area of the character input column 648 is decreased since the ratio of characters inputted into the character input column 648 is small. In this case, a height 664 of the character input column 648 is decreased to a height 668. Accordingly, the character input column 648 is decreased to an adjusted character input column 678 within the form image 582.

On the other hand, the area of the character input column 644 is increased since the ratio of characters inputted into the character input column 644 is large. In this case, a height 662 of the character input column 644 is increased to a height 666. Accordingly, the character input column 644 is increased to an adjusted character input column 674 within the form image 582. The contents of the descriptions 642 and 646 are not changed, and the position of the description 646 is changed to a position right above the adjusted character input column 678 in accordance with a change in the size of the character input column 648.

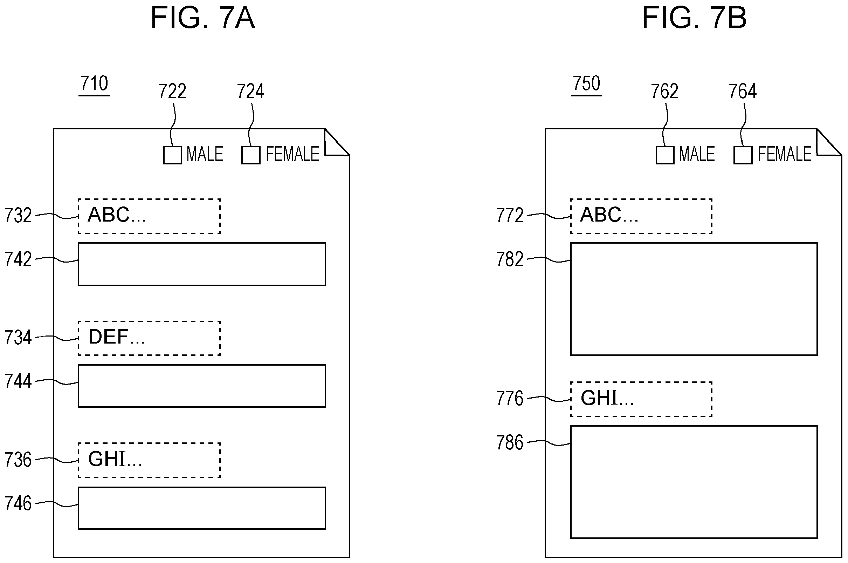

Figs. 7A and 7B illustrate an example of processing executed in this exemplary embodiment. In this example, check columns are included within a form image, and processing for deleting a character input column from the form image is performed.

Within an original form image 710 shown in Fig. 7A, a check column 722 for indicating that a user is a male, a check column 724 for indicating that a user is a female, a set of a description region 732 and a character input column 742, a set of a description region 734 and a character input column 744, and a set of a description region 736 and a character input column 746 are included.

As a result of filling in the form by a user, if characters are not inputted into the character input column 744 (if the number of inputted characters is smaller than a predetermined threshold), the character input column 744 and the associated description region 734 are deleted, thereby generating an adjusted form image 750 shown in Fig. 7B. If many characters are inputted into the character input columns 742 and 746 (if the numbers of inputted characters are greater than a predetermined threshold), the character input columns 742 and 746 are increased (in this case, the heights are increased), thereby generating character input columns 782 and 786, respectively. The position of the description region 736 is changed to the position of a description region 776. Since the check columns 722 and 724 are not columns to be adjusted, the sizes thereof are not changed.

As a result of executing the above-described processing, the adjusted form image 750 has check columns 762 and 764, description regions 772 and 776, and character input columns 782 and 786.

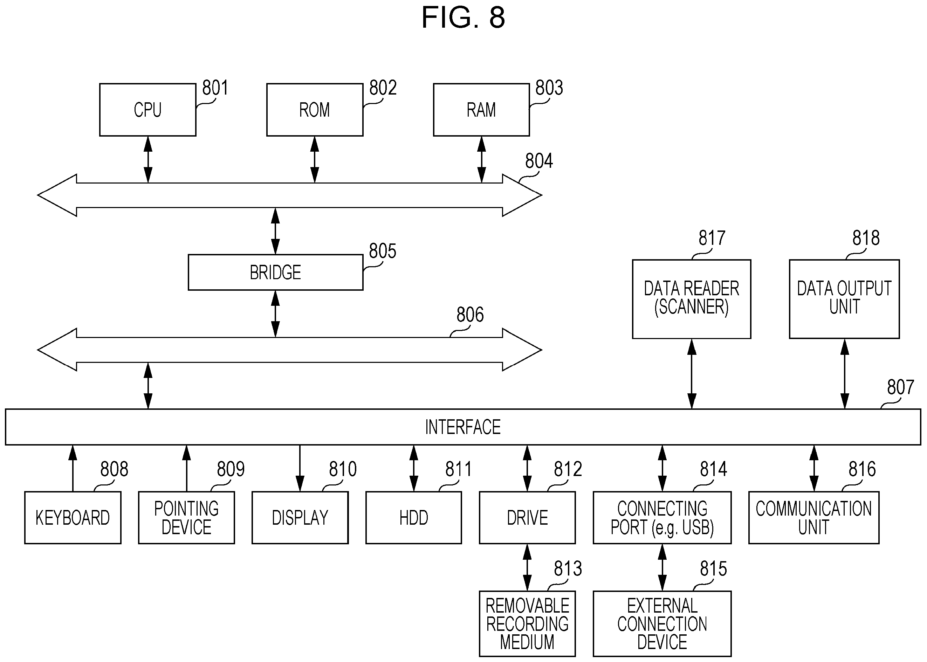

An example of the hardware configuration of the image processing device 100 of this exemplary embodiment will be described below with reference to Fig. 8. The hardware configuration shown in Fig. 8 is implemented as a PC, for example, and includes a data reader 817, such as a scanner, and an output unit 818, such as a printer.

A CPU 801 is a control unit that executes processing in accordance with a computer program describing an execution sequence of the modules of the above-described exemplary embodiment, that is, the image receiving module 110, the inputted-character/input-column identifying module 120, the inputted-character-amount obtaining module 135, the input-column-information obtaining module 140, and the adjusting module 145.

A read only memory (ROM) 802 stores therein programs and operation parameters used by the CPU 801. A RAM 803 stores therein programs used during the execution of the CPU 801 and parameters which change appropriately during the execution of the programs. The CPU 801, the ROM 802, and the RAM 803 are connected to one another via a host bus 804, which is constituted by, for example, a CPU bus.

The host bus 804 is connected to an external bus 806, such as a peripheral component interconnect/interface (PCI) bus, via a bridge 805.

A keyboard 808 and a pointing device 809, such as a mouse, are input devices operated by an operator. A display 810 is, for example, a liquid crystal display or a cathode ray tube (CRT), and displays various items of information as text or image information.

A hard disk drive (HDD) 811 has a built-in hard disk (may alternatively be, for example, a flash memory) and drives the hard disk so as to record or play back information or programs executed by the CPU 801. In the hard disk, received document images, the character input column information table 400, and adjusted form images, for example, are stored. Various other items of data and various other computer programs are also stored in the hard disk.

A drive 812 reads data or a program recorded in a removable recording medium 813, such as a magnetic disk, an optical disc, a magneto-optical disk, or a semiconductor memory, and supplies the read data or program to the RAM 803 via an interface 807, the external bus 806, the bridge 805, and the host bus 804. The removable recording medium 813 is also usable as a data recording region, which is similar to a hard disk.

A connecting port 814 is a port for connecting the PC to an external connection device 815, and has a connecting portion, such as a universal serial bus (USB) port or an IEEE1394 port. The connecting port 814 is connected to, for example, the CPU 801, via the interface 807, the external bus 806, the bridge 805, and the host bus 804. A communication unit 816 is connected to a connection network and executes data communication processing with an external source. The data reader 817 is, for example, a scanner, and executes processing for reading documents. The data output unit 818 is, for example, a printer, and executes processing for outputting document data.

The hardware configuration of the image processing device 100 shown in Fig. 8 is only an example, and the exemplary embodiment may be configured in any manner as long as the modules described in the exemplary embodiment are executable. For example, some modules may be configured as dedicated hardware (for example, an application specific integrated circuit (ASIC)), or some modules may be installed in an external system and be connected to the PC via a communication line. Alternatively, a system, such as that shown in Fig. 8, may be connected to a system, such as that shown in Fig. 8, via a communication line, and may be operated in cooperation with each other. Additionally, instead of into a PC, the modules may be integrated into a mobile information communication device (including a cellular phone, a smartphone, a mobile device, and a wearable computer), a home information appliance, a robot, a copying machine, a fax machine, a scanner, a printer, or a multifunction device.

In the above-described exemplary embodiment, a questionnaire sheet has been discussed as an example of a form document. However, any type of document may be applicable as long as a form document including a character input column is used.

The above-described program may be stored in a recording medium and be provided. The program recorded on a recording medium may be provided via a communication medium. In this case, the above-described program may be implemented as a "non-transitory computer readable medium storing the program therein" in the exemplary embodiment of the invention.

The "non-transitory computer readable medium storing a program therein" is a recording medium storing a program therein that can be read by a computer, and is used for installing, executing, and distributing the program.

Examples of the recording medium are digital versatile disks (DVDs), and more specifically, DVDs standardized by the DVD Forum, such as DVD-R, DVD-RW, and DVD-RAM, DVDs standardized by the DVD+RW Alliance, such as DVD+R and DVD+RW, compact discs (CDs), and more specifically, a read only memory (CD-ROM), a CD recordable (CD-R), and a CD rewritable (CD-RW), Blu-ray disc (registered trademark), a magneto-optical disk (MO), a flexible disk (FD), magnetic tape, a hard disk, a ROM, an electrically erasable programmable read only memory (EEPROM) (registered trademark), a flash memory, a RAM, a secure digital (SD) memory card, etc.

The entirety or part of the above-described program may be recorded on such a recording medium and stored therein or distributed. Alternatively, the entirety or part of the program may be transmitted through communication by using a transmission medium, such as a wired network used for a local area network (LAN), a metropolitan area network (MAN), a wide area network (WAN), the Internet, an intranet, or an extranet, a wireless communication network, or a combination of such networks. The program may be transmitted by using carrier waves.

The above-described program may be part of another program, or may be recorded, together with another program, on a recording medium. The program may be divided and recorded on plural recording media. Further, the program may be recorded in any form, for example, it may be compressed or encrypted, as long as it can be reconstructed.

The foregoing description of the exemplary embodiment of the present invention has been provided for the purposes of illustration and description. It is not intended to be exhaustive or to limit the invention to the precise forms disclosed. Obviously, many modifications and variations will be apparent to practitioners skilled in the art. The embodiment was chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

1. An image processing device (100) comprising:
an image receiving module (110) for receiving multiple images of a form, each image comprising at least one character inputted by a user and at least one character input column into which the character has been inputted by a user;
an inputted-character identifying unit (125) that identifies characters inputted by a user from a plurality of items of image information indicating the multiple images by separating an image portion inputted by the user from an image portion indicating the form;
a character-input-column identifying unit (130) that identifies, from the plurality of items of image information indicating the multiple images, a character input column in the image portion indicating the form ;
an inputted-character-amount obtaining unit (135) that obtains an amount of inputted characters inputted by the user in each of the character input columns located at different positions;
a size-information obtaining unit (140) that obtains information concerning a size of each of the character input columns; and
an adjusting unit (145) that adjusts the size of each of the character input columns in accordance with the amount of inputted characters in the corresponding character input column and the information concerning the size of the corresponding character input column.

2. The image processing device according to Claim 1, wherein the amount of inputted characters obtained by the inputted-character-amount obtaining unit (135) is at least one of the number of characters, a size of characters, a total value of sizes of substantially rectangular portions surrounding individual characters, and a statistical value of amounts of inputted characters in the plurality of items of image information.

3. The image processing device according to Claim 1 or 2, further comprising:
a blank-region identifying unit that identifies a blank region surrounding a character input column,
wherein, if the character input column is enlarged, the adjusting unit (145) enlarges the character input column in a direction toward the blank region.

4. The image processing device according to any one of Claims 1 to 3, wherein, if the amount of inputted characters in a character input column is equal to or smaller than a predetermined threshold, the adjusting unit (145) deletes the character input column or suggests that the character input column be deleted.

5. An image processing method comprising:
receiving (S302) multiple images of a form, each image comprising at least one character inputted by a user and at least one character input column into which the character has been inputted by a user;
identifying (S306) characters inputted by a user from a plurality of items of image information indicating the multiple images by separating an image portion inputted by the user from an image portion indicating the form;
identifying (S308), from the plurality of items of image information indicating the multiple images, a character input column in the image portion indicating the form;
obtaining (S310) an amount of inputted characters inputted by the user in each of the character input columns located at different positions;
obtaining (S312) information concerning a size of each of the character input columns; and
adjusting (S314) the size of each of the character input columns in accordance with the amount of inputted characters in the corresponding character input column and the information concerning the size of the corresponding character input column.

6. A computer program comprising instructions which, when the program is executed by a computer, cause the computer to carry out the steps of the method of claim 5.

## Patentansprüche

1. Bildverarbeitungsvorrichtung (100), umfassend:
ein Bildempfangsmodul (110) zum Empfangen mehrerer Bilder eines Formulars, wobei jedes Bild mindestens ein Zeichen, das von einem Benutzer eingegeben wurde, und mindestens eine Zeicheneingabespalte, in die das Zeichen von einem Benutzer eingegeben wurde, umfasst;
eine Eingabezeichen-Identifizierungseinheit (125), die aus einer Vielzahl von Elementen von Bildinformationen, die die mehreren Bilder anzeigen, von einem Benutzer eingegebene Zeichen identifiziert, indem ein Bildabschnitt, der von dem Benutzer eingegeben wurde, von einem Bildabschnitt, der das Formular anzeigt, separiert wird;
eine Zeicheneingabespalten-Identifizierungseinheit (130), die aus der Vielzahl von Elementen von Bildinformationen, die die mehreren Bilder anzeigen, eine Zeicheneingabespalte in dem Bildabschnitt, der das Formular anzeigt, identifiziert;
eine Zeichen-Eingabemenge-Gewinnungseinheit (135), die eine Menge von eingegebenen Zeichen erhält, die von dem Benutzer in jede der Zeicheneingabespalten, die sich an verschiedenen Positionen befinden, eingegeben wurden;
eine Größeninformations-Gewinnungseinheit (140), die Informationen bezüglich einer Größe jeder der Zeicheneingabespalten erhält; und
eine Anpassungseinheit (145), die die Größe jeder der Zeicheneingabespalten gemäß der Menge der in der entsprechenden Zeicheneingabespalte eingegebenen Zeichen und den Informationen bezüglich der Größe der entsprechenden Zeicheneingabespalte anpasst.

2. Bildverarbeitungsvorrichtung nach Anspruch 1, wobei die Menge der durch die Zeichen-Eingabemenge-Gewinnungseinheit (135) erhaltenen eingegebenen Zeichen mindestens eines von der Anzahl der Zeichen, einer Zeichengröße, einem Gesamtwert von Größen von im Wesentlichen rechteckigen Abschnitten, die einzelne Zeichen umgeben, und einem statistischen Wert von Mengen eingegebener Zeichen in der Vielzahl von Elementen von Bildinformationen ist.

3. Bildverarbeitungsvorrichtung nach Anspruch 1 oder 2, ferner umfassend:
eine Leerbereichs-Identifizierungseinheit, die einen leeren Bereich identifiziert, der eine Zeicheneingabespalte umgibt,
wobei, wenn die Zeicheneingabespalte vergrößert wird, die Anpassungseinheit (145) die Zeicheneingabespalte in einer Richtung zu dem leeren Bereich hin vergrößert.

4. Bildverarbeitungsvorrichtung nach einem der Ansprüche 1 bis 3, wobei, wenn die Menge von eingegebenen Zeichen in einer Zeicheneingabespalte gleich oder kleiner als ein vorbestimmter Schwellenwert ist, die Anpassungseinheit (145) die Zeicheneingabespalte löscht, oder vorschlägt, die Zeicheneingabespalte zu löschen.

5. Bildverarbeitungsverfahren, umfassend:
Empfangen (S302) mehrerer Bilder eines Formulars, wobei jedes Bild mindestens ein Zeichen, das von einem Benutzer eingegeben wurde, und mindestens eine Zeicheneingabespalte, in die das Zeichen von einem Benutzer eingegeben wurde, umfasst;
Identifizieren (S306) von Zeichen, die von einem Benutzer eingegeben wurden, aus einer Vielzahl von Elementen von Bildinformationen, die die mehreren Bilder anzeigen, indem ein von dem Benutzer eingegebener Bildabschnitt von einem Bildabschnitt, der das Formular anzeigt, separiert wird;
Identifizieren (S308), aus der Vielzahl von Elementen von Bildinformationen, die die mehreren Bilder anzeigen, einer Zeicheneingabespalte in dem Bildabschnitt, der das Formular anzeigt;
Erhalten (S310) einer Menge von eingegebenen Zeichen, die von dem Benutzer in jede der Zeicheneingabespalten, die sich an verschiedenen Positionen befinden, eingegeben wurden;
Erhalten (S312) von Informationen bezüglich einer Größe jeder der Zeicheneingabespalten; und
Anpassen (S314) der Größe jeder der Zeicheneingabespalten gemäß der Menge der eingegebenen Zeichen in der entsprechenden Zeicheneingabespalte und den Informationen bezüglich der Größe der entsprechenden Zeicheneingabespalte.

6. Computerprogramm, das Anweisungen umfasst, die, wenn das Programm von einem Computer ausgeführt wird, den Computer veranlassen, die Schritte des Verfahrens nach Anspruch 5 auszuführen.

## Revendications

1. Dispositif de traitement d'images (100) comprenant :
un module de réception d'images (110) pour recevoir plusieurs images d'un formulaire, chaque image comprenant au moins un caractère entré par un utilisateur et au moins une colonne d'entrée de caractère dans laquelle le caractère a été entré par un utilisateur ;
une unité d'identification de caractères entrés (125) qui identifie des caractères entrés par un utilisateur à partir d'une pluralité d'éléments d'informations d'image indiquant les images multiples en séparant une partie d'image entrée par l'utilisateur d'une partie d'image indiquant le formulaire ;
une unité d'identification de colonne d'entrée de caractères (130) qui identifie, à partir de la pluralité d'éléments d'informations d'image indiquant les images multiples, une colonne d'entrée de caractères dans la partie d'image indiquant le formulaire ;
une unité d'obtention de quantité de caractères entrés (135) qui obtient une quantité de caractères entrés ayant été entrés par l'utilisateur dans chacune des colonnes d'entrée de caractères situées dans différentes positions ;
une unité d'obtention d'informations de taille (140) qui obtient des informations concernant une taille de chacune des colonnes d'entrée de caractères ; et
une unité d'ajustement (145) qui ajuste la taille de chacune des colonnes d'entrée de caractères en fonction de la quantité de caractères entrés dans la colonne d'entrée de caractères correspondante et des informations concernant la taille de la colonne d'entrée de caractères correspondante.

2. Dispositif de traitement d'images selon la revendication 1, dans lequel la quantité de caractères entrés obtenue par l'unité d'obtention de quantité de caractères entrés (135) est au moins l'un du nombre de caractères, d'une taille de caractères, d'une valeur totale de tailles de parties sensiblement rectangulaires entourant des caractères individuels, et d'une valeur statistique de quantités de caractères entrés dans la pluralité d'éléments d'informations d'image.

3. Dispositif de traitement d'images selon la revendication 1 ou 2, comprenant en outre :
une unité d'identification de zone vierge qui identifie une zone vierge entourant une colonne d'entrée de caractères,
dans lequel, si la colonne d'entrée de caractères est agrandie, l'unité d'ajustement (145) agrandit la colonne d'entrée de caractères dans une direction vers la région vierge.

4. Dispositif de traitement d'images selon l'une quelconque des revendications 1 à 3, dans lequel, si la quantité de caractères entrés dans une colonne d'entrée de caractères est égale ou inférieure à un seuil prédéterminé, l'unité d'ajustement (145) supprime la colonne d'entrée de caractères ou suggère que la colonne d'entrée de caractères soit supprimée.

5. Procédé de traitement d'images comprenant les étapes consistant à :
recevoir (S302) plusieurs images d'un formulaire, chaque image comprenant au moins un caractère entré par un utilisateur et au moins une colonne d'entrée de caractères dans laquelle le caractère a été entré par un utilisateur ;
identifier (S306) des caractères entrés par un utilisateur à partir d'une pluralité d'éléments d'informations d'image indiquant les images multiples en séparant une partie d'image entrée par l'utilisateur d'une partie d'image indiquant le formulaire ;
identifier (S308), à partir de la pluralité d'éléments d'informations d'image indiquant les images multiples, une colonne d'entrée de caractères dans la partie d'image indiquant le formulaire ;
obtenir (S310) une quantité de caractères entrés ayant été entrés par l'utilisateur dans chacune des colonnes d'entrée de caractères situées dans différentes positions ;
obtenir (S312) des informations concernant une taille de chacune des colonnes d'entrée de caractères ; et
ajuster (S314) la taille de chacune des colonnes d'entrée de caractères en fonction de la quantité de caractères entrés dans la colonne d'entrée de caractères correspondante et des informations concernant la taille de la colonne d'entrée de caractères correspondante.

6. Programme informatique comprenant des instructions qui, lorsque le programme est exécuté par un ordinateur, amènent l'ordinateur à exécuter les étapes du procédé de la revendication 5.
